Europäisches Patentamt

European Patent Office

Office européen des brevets

(19)

(11) **EP 1 119 822 B1**

(12) **EUROPÄISCHE PATENTSCHRIFT**

(45) Veröffentlichungstag und Bekanntmachung des Hinweises auf die Patenterteilung:
**05.02.2003 Patentblatt 2003/06**

(21) Anmeldenummer: **99952488.7**

(22) Anmeldetag: **04.10.1999**

(51) Int Cl.⁷: **G06K 9/00**

(86) Internationale Anmeldenummer:
**PCT/EP99/07334**

(87) Internationale Veröffentlichungsnummer:
**WO 00/021021 (13.04.2000 Gazette 2000/15)**

(54) **VERFAHREN UND SYSTEM ZUR PERSONENERKENNUNG MIT MODELLBASIERTER GESICHTSFINDUNG**

METHOD AND SYSTEM FOR RECOGNIZING PEOPLE WITH MODEL-BASED FACE DETECTION

PROCEDE ET SYSTEME DE RECONNAISSANCE DE PERSONNE AVEC LOCALISATION MODELISEE DU VISAGE

(84) Benannte Vertragsstaaten:
**AT BE CH CY DE DK ES FI FR GB GR IE IT LI LU MC NL PT SE**

(30) Priorität: **05.10.1998 DE 19847261**

(43) Veröffentlichungstag der Anmeldung:
**01.08.2001 Patentblatt 2001/31**

(73) Patentinhaber: **BioID AG**
**10709 Berlin (DE)**

(72) Erfinder:
• **FRISCHHOLZ, Robert**
**DCS Dialog Communicat. Sys. AG**
**Am Wetterkreuz 19a D-91058 Erlangen (DE)**
• **Herr Dipl-Inf. Oliver Jesorsky**
**90480 Nürnberg (DE)**

(74) Vertreter: **Liesegang, Eva et al**
**Forrester & Boehmert,**
**Pettenkoferstrasse 20-22**
**80336 München (DE)**

(56) Entgegenhaltungen:
• **ALTAF U M S ET AL: "Face recognition using the HAVNET neural network" APPLICATIONS AND SCIENCE OF ARTIFICIAL NEURAL NETWORKS, ORLANDO, FL, USA, 17-21 APRIL 1995, Bd. 2492, pt.2, Seiten 873-883, XP000863666 Proceedings of the SPIE - The International Society for Optical Engineering, 1995, SPIE-Int. Soc. Opt. Eng, USA ISSN: 0277-786X**
• **TAKACS B ET AL: "Face recognition using binary image metrics" PROCEEDINGS THIRD IEEE INTERNATIONAL CONFERENCE ON AUTOMATIC FACE AND GESTURE RECOGNITION (CAT. NO.98EX107), PROCEEDINGS THIRD IEEE INTERNATIONAL CONFERENCE ON AUTOMATIC FACE AND GESTURE RECOGNITION, NARA, JAPAN, 14-16 APRIL 1998, Seiten 294-299, XP000863535 1998, Los Alamitos, CA, USA, IEEE Comput. Soc, USA ISBN: 0-8186-8344-9**
• **BICHSEL M ET AL: "DER ELEKTRONISCHE PFORTNER: AUTOMATISCHES ERKENNEN UND IDENTIFIZIEREN VON MENSCHLICHEN GESICHTERN" MUSTERERKENNUNG,XX,XX, Seite 106-113 XP000541362**

**Beschreibung**

Die Erfindung betrifft ein Verfahren und ein System zur Personenerkennung mit modellbasierter Gesichtsfindung.

Es gibt Verfahren und Systeme zur biometrischen Personenerkennung, die sich auf eine Kombination aus Gesichtserkennung, Spracherkennung und Lippenbewegungserkennung stützen. Der kritische Teil dabei ist die Gesichtsfindung. Die Erfindung betrifft ein Verfahren und ein System zur Lokalisierung des Gesichts einer Person in beliebigen Kamerabildern innerhalb eines solchen Systems zur biometrischen Personenerkennung.

Das grundlegende Element bei der Gesichtserkennung ist die Gesichtsfindung, d.h. die exakte Lokalisierung des Bildausschnittes, der dem menschlichen Gesicht entspricht. Im Stand der Technik vereinfachen einige Lösungsvorschläge diese Problematik, indem sie einen einheitlichen Hintergrund fordern, vor dem dann das Gesicht gefunden werden kann. Auch durch Hinzunahme der Bewegtbildinformationen kann ein Gesicht erkannt werden, wobei hier unterstellt wird, daß nur der Bereich des Bildes, der sich im Laufe einer Bildfolge ändert, das Gesicht enthält.

Solche einfachen Ansätze genügen den heutigen Anforderungen an die Gesichtsfindung und -erkennung nicht mehr. Die Personenerkennung wird heute beispielsweise durch PC-Desktopkameras und andere mobile Kameras unterstützt, so daß die Gesichtsfindung auch dann robust funktionieren muß, wenn ein beliebiger Hintergrund oder sogar ein bewegtes Hintergrundbild vorliegt.

Die erfolgreichsten der heute bekannten Ansätze auf diesem Gebiet benutzen neuronale Netze. Diese Netze werden mit einer großen Anzahl von Gesichtsbeispielen trainiert, wobei bei dem Training als Gegenklasse eine noch größere Anzahl von "Nicht-Gesichtsbildern" verwendet wird, damit das neuronale Netz schließlich zwischen Gesicht und Hintergrund unterscheiden kann. Ein Nachteil dieser Methode ist neben der langen Rechenzeit die starke Abhängigkeit von Varianzen, wie Skalierung, Rotation und Verzerrung.

Die Erfindung hat daher zur Aufgabe, ein neues System und Verfahren zur Gesichtsfindung anzugeben, das robust ist und eine Gesichtsfindung in Echtzeit zu leisten vermag.

Zur Lösung dieser Aufgabe schlägt die Erfindung ein Verfahren mit den Merkmalen von Anspruch 1 und ein System mit den Merkmalen von Anspruch 8 vor.

Das erfindungsgemäße Verfahren und System sind modellbasiert. Das heißt, es wird ein binäres Bild eines menschliches Gesichtes, oder eine sogenannte "Strichzeichnung" in einem entsprechenden Gesamtbild gesucht. Aus einem Originalbild wird also zunächst ein binarisiertes Bild, z.B. mittels Kantenextraktion, erzeugt, und dieses binarisierte Bild wird mit einem binären Gesichtsmodell verglichen, um das Bild des menschlichen Gesichtes in dem entsprechend binarisierten Gesamtbild zu suchen und zu finden. Es wird also nicht, wie bei den bisherigen Ansätzen des Standes der Technik, der Intensitätswert der einzelnen Kamerapixel verglichen oder nach Pixelveränderungen gesucht, sondern die Erfindung stützt sich auf eine Modellstruktur nach Art einer Strichzeitung, die z.B. in Form einer Bitabbildung vorliegen kann.

Das Modell des Gesichtes oder die "Strichzeichnung", wird mit dem binarisierten Bild mit Hilfe einer modifizierten Version des sog. Hausdorff-Abstandes in zahlreichen Skalierungs-, Rotations- und Verzerrungsvarianten des Bildes verglichen. Die Anwendung des Hausdorff-Abstandes auf die Gesichts<u>erkennung</u> wurde z.B. von B. Takacs und H. Wechsler in "Face Recognition Using Binary Image Metrics", 3<sup>rd</sup> International Conference on Automatic Face and Gesture Recognition, IEEE Proceedings, April 1998, beschrieben. Auf diese Veröffentlichung und die dortige Erläuterung des Hausdorff-Abstandes wird ausdrücklich Bezug genommen.

Die genannte Veröffentlichung beschreibt die Anwendung des Hausdorff-Abstandes zum Zwecke der Gesichtserkennung. Ausdrücklich wird darauf hingewiesen, daß die Gesichtsfindung mit einem gänzl'ich anderen Verfahren erreicht wird. Die Verwendung des Hausdorff-Abstandes zur Gesichtsfindung wurde im Stand der Technik nicht in Erwägung gezogen, u.a. weil dieser Algorithmus sehr viel Rechenzeit in Anspruch nimmt.

Dabei sollte man sich die grundsätzlichen Unterschiede in der Problematik der Gesichtsfindung und der Gesichtserkennung ins Gedächtnis rufen: Wenn das Gesicht in einem, insbesondere bewegten Bild einmal gefunden ist, kann dieses Gesichtsbild zur Erkennung bzw. Identifikation mit nahezu beliebigen Methoden mit einer Sammlung von Gesichtern aus einer Datenbank verglichen werden. Ist das fragliche Gesicht in der Datenbank enthalten, sind die Trefferraten im allgemeinen üblicherweise sehr hoch, bei etwa 99%. Das Schwierige bei der Personenerkennung ist jedoch der vorausgeschaltete Schritt, in einem beliebigen Bild zunächst das Gesicht zu finden und perfekt "auszuschneiden". Was bei der wortsinngemäßen Gegenüberstellung Gesichtserkennung/Gesichts-findung also als geringfügiger Unterschied erscheinen mag, ist im Ergebnis für die Gesichts- und somit Personenerkennung entscheidend für die Güte des Ergebnisses.

Der Bildvergleich mithilfe des Hausdorff-Abstandes basiert auf folgenden Grundlagen:

Aus dem binarisierten Bild und dem Gesichtsmodell werden zwei Punktegruppen gebildet,

$$A = \{a_1,...,a_m\}$$

und

$$B = \{b_1,...,b_n\}$$

der Hausdorff-Abstand ist dann definiert durch
H(A,B) = max(h(A,B),h(B,A))
wobei

$$h(A,B) = \max_{a \in A} \min_{b \in B} \|a - b\|.$$

Das erfindungsgemäße System und Verfahren sind unempfindlich gegenüber den häufigsten Störeinwirkungen, wie eine Drehung, unterschiedliche Skalierung oder Verzerrung des Bildes, weil diese bei dem Vergleich der Punktegruppen leicht berücksichtigt werden können. Auch ist für den Einsatz des erfindungsgemäßen Verfahrens kein langer Einlernvorgang nötig, anders als bei den neuronalen Netzen. Im Gegensatz zu den Ansätzen mit neuronalen Netzen müssen auch keine "Nicht-Gesichtsbilder" vorgegeben, gelernt oder auf andere Weise berücksichtigt werden. Das System erkennt ein Gesicht, wie der Mensch, aufgrund der Eigenschaften des Gesichtes selbst, nicht aufgrund der Eigenschaften des Hintergrundes, die somit nicht berücksichtigt werden müssen. Durch eine geeignete Ausbildung des Modells, der "Strichzeichnung", können gesuchte Besonderheiten (z. B. Brillenträger) schnell in dem Modell berücksichtigt werden.

Das erfindungsgemäße System und Verfahren können in der Zukunft in biometrischen Identifikationssystemen zur automatischen biometrischen Zugangskontrolle verwendet werden, bei denen häufig die Gesichtserkennung, Spracherkennung, Lippenbewegungserkennung, Retinaabtastung, etc. kombiniert werden. Mit Hilfe der Erfindung ist es möglich, für die Gesichtserkennung den exakten Gesichtsausschnitt zu finden, die exakte Augenposition für eine Retinaabtastung zu lokalisieren, die exakte Mundposition zur Berechnung der Lippenbewegungen zu lokalisieren und dergleichen.

Das erfindungsgemäße System und Verfahren können jedoch noch sehr viel universeller eingesetzt werden, indem z. B. durch Vorgabe entsprechender binärer Modelle nur Menschen mit bestimmten Gesichtszügen erkannt werden, um nach solchen Merkmalen wie Mimik, Rasse oder Geschlecht zu unterscheiden. Das erfindungsgemäße Verfahren und System sind nicht einmal auf die Gesichtsfindung beschränkt, weil das Modell, nach dem gesucht wird, auch eine Hand oder einen anderen oder mehrere Teile des menschlichen Körpers oder einer Sache umfassen könnte.

In ihren bevorzugten Ausführungsformen sieht die Erfindung für die Gesichtsfindung die Anwendung eines modifizierten Hausdorff-Abstandes vor, um den Rechenaufwand zu minimieren und so ein Ergebnis innerhalb einer vertretbaren Rechenzeit zu erhalten. Mit der derzeitigen Ausführungsform des modifizierten Hausdorff-Abstandes zur Gesichtsfindung kann etwa ein Gesichtsbild pro Sekunde detektiert werden.

Zusätzlich sieht die Erfindung eine neuartige Vorauswahl des Bildes durch eine spezielle Ausnutzung der Voronoioberfläche vor, die auch zur Beschleunigung des Verfahrens beiträgt.

Das erfindungsgemäße System und Verfahren können sowohl als Software als auch als Hardwaremodule realisiert werden, wobei die modifizierten Algorithmen entweder programmiert oder in einer eigenen Hardware realisiert und somit wenigstens in der Hardwarelösung echtzeitfähig sind.

Die Erfindung ist im folgenden mit weiteren Einzelheiten in bezug auf die Zeichnungen näher erläutert. In den Figuren zeigen:

Figur 1    ein Originalbild, das mit einer digitalen Kamera aufgenommen wurde;

Figur 2    eine binarisierte Version des Originalbildes der Figur 1;

Figur 3    ein binäres Gesichtsmodell in Form einer Strichzeichnung; und

Figur 4    die mit Hilfe des Gesichtsmodelles der Figur 3 in dem binarisierten Bild der Figur 2 gefundene Position des Gesichtsmodells.

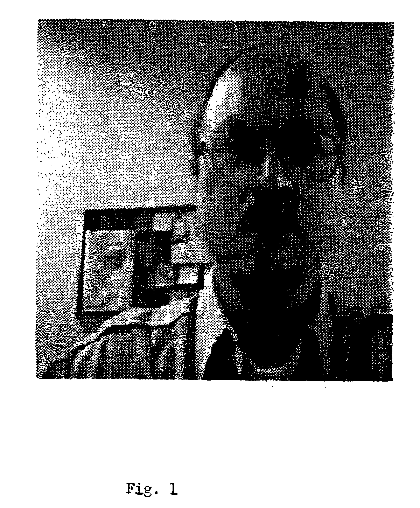

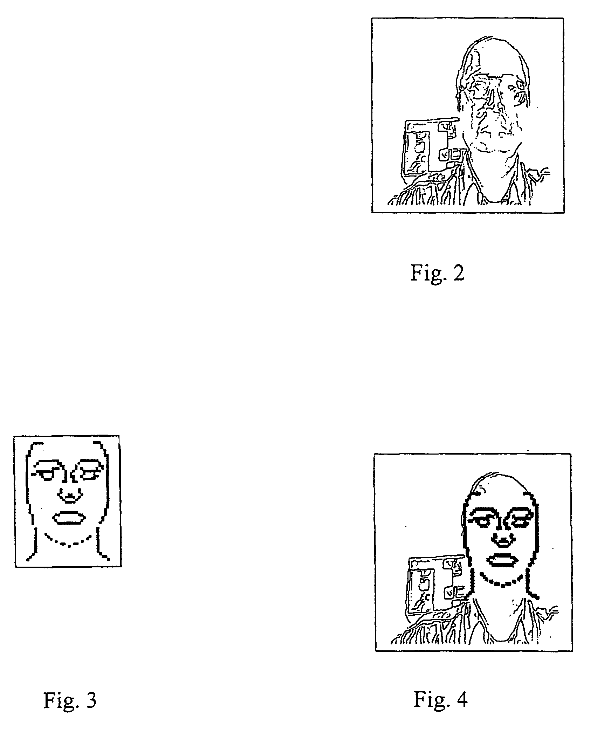

Figur 1 zeigt das Originalbild einer Person mit Gesicht, Schulterpartie und Hintergrund, das mittels Kantenextraktion in das in Figur 2 dargestellte binarisierte Bild umgewandelt wird. Hierzu werden die Kanten am Hell-Dunkel-Übergang in dem Originalbild dazu verwendet, eine Art Strichzeichnung des binarisierten Bildes gemäß Figur 2 herzustellen. Gesucht wird nach dem zweidimensionalen Gesichtsmodell der Figur 3 mit Hilfe des Hausdorff-Abstandes unter den unten näher erörterten Bedingungen.

Der allgemeine Hausdorff-Abstand bietet ein Mittel zur Bestimmung der Ähnlichkeit einer Punktgruppe zu einer anderen durch Untersuchung des Anteils der Punkte in der einen Gruppe, die in der Nähe von Punkten in der anderen Gruppe, oder umgekehrt, liegen. Es gibt zwei Parameter, um zu entscheiden, ob die zwei Punktegruppen einander ähneln oder nicht: (i) der maximale Abstand, den die Punkte voneinander entfernt sein können und bei dem sie gleichwohl noch als nah beieinander liegend betrachtet werden, und (ii) welcher Anteil der Punkte in einer Gruppe maximal diesen Abstand von den Punkten in der anderen Gruppe entfernt ist.

Die Gesichtsfindung mit Hilfe des Hausdorff-Abstandsmaßes unterscheidet sich von anderen Techniken, wie der binären Korrelation, weil es keine Paarung der Punkte in den beiden Gruppen gibt, die verglichen werden. Eine Erläuterung der mathematischen Grundlagen des Hausdorff-Abstandes findet man im Internet unter der Adresse http://www.cs.cornell.edu/ Vision/hausdorff/hausmatch.html. In diesem Dokument sind die Grundlagen des Hausdorff-Abstandes erläutert, auf die Bezug genommen wird.

Die zweidimensionale Bildabbildung der Figur 3 dient also als ein Gesichtsmodell, das in dem binarisierten Bild der Figur 2 lokalisiert werden soll, wobei geeignete zweidimensionale Transformationen und Skalierungen vorgenommen werden können.

Figur 4 zeigt die beste Übereinstimmung des Modells der Figur 3 mit dem binarisierten Bild der Figur 2 und somit die gefundene Position des Modells in dem binären Bild in dem Sinne, daß in Figur 4 der größte Anteil der binarisierten Kantenpunkte der Figur 2 in der Nähe der Bildpunkte der Figur 3 liegen. Bei Verwendung des Hausdorff-Abstandes findet man auch dann eine Übereinstimmung zwischen dem Gesichtsmodell und dem binarisiertem Bild, wenn die entsprechenden binären Punkte nicht exakt übereinanderliegen.

Zur Realisierung dieses modellbasierten Gesichtsfindungsverfahrens werden bei einer bevorzugten Ausführungsform der Erfindung folgende Modifikationen des Hausdorff-Abstandes vorgenommen, um eine Gesichtsfindung in Echtzeit zu erreichen:

Die Erfindung verwendet einen hierarchischen Ansatz, bei dem zunächst das binarisierte Bild stark verkleinert wird, in dem verkleinerten binarisierten Bild nach einem entsprechend kleinen Gesichtsmodell gesucht wird; und wenn eine bestimmte Region als wahrscheinlicher Ort des gesuchten Gesichtes erkannt wird, wird diese Region und ihre Umgebung vergrößert, um den Suchvorgang mit einem entsprechend größeren Modellgesicht fortzusetzen, usw.

Bei dieser hierarchischen Suchweise werden unterschiedliche Modelle verwendet; d.h. bei dem stark verkleinerten binarisierten Bild wird z.B. ein Modell (Figur 3 ) mit Schultern verwendet, um die Person zuverlässig zu erkennen. Je größer der Maßstab des binarisierten Bildes wird, desto feiner wird auch die Auflösung, und desto detaillierter wird das Modell für die Gesichtsfindung, so daß schließlich ein Modell verwendet werden kann, das z.B. nur noch Augen, Nase und/oder Mund enthält.

Auch die Kantenextraktion zur Herstellung des binarisierten Bildes der Figur 2 kann an die jeweiligen Hierarchiestufen, in denen unterschiedlich feine Auflösungen benötigt werden, angepaßt werden. Hierzu sieht die Erfindung die Verwendung eines adaptiven Sobel-Filters vor.

Innerhalb der verschiedenen Hierarchiestufen können jeweils geeignete Rotationen des Bildes und/oder des Modells vorgenommen werden.

Zusätzlich sieht die Erfindung vorzugsweise eine Vorfilterung des binarisierten Bildes (Erosion, Dilatation, etc.) vor.

Ein weiteres wichtiges Merkmal der Erfindung ist die Modifikation des Hausdorff-Abstandes. Bei einer besonders bevorzugten Ausführungsform der Erfindung ist vorgesehen, mit einem modifizierten Hausdorff-Abstand zu arbeiten, bei dem nicht nur der mittlere Abstand aller minimalen Abstände zwischen Modell und Bild als Abstandsmaß verwendet wird, sondern bei dem der Mittelwert der ersten x% (0<x<100) aller minimalen Abstände als Grundlage der Berechnung des Hausdorff-Maßes dient, damit größere Abweichungen ("Ausreißer") nicht berücksichtigt werden und das Ergebnis verfälschen.

## Patentansprüche

1. Verfahren zur Gesichtsfindung in einem binarisierten Bild durch Vergleichen der Punktegruppe des binarisierten Bildes mit der Punktegruppe eines Gesichtsmodells, wobei die Punktegruppen des binarisierten Bildes und des Gesichtsmodells anhand des Hausdorff-Abstandes zwischen den Punkten der Punktegruppen verglichen werden, **dadurch gekennzeichnet, daß**
das Gesichtsmodell mehrmals 2-dimensional transformiert wird, um das Gesichtsmodell in dem binarisierten Bild zu lokalisieren und eine Position eines Gesichts in dem binarisierten Bild gefunden wird, wenn ein aus dem Hausdorff-Abstand abgeleitetes Maß einen Grenzwert unterschreitet.

2. Verfahren nach Anspruch 1, bei dem das binarisierte Bild aus dem Originalbild mittels Kantenextraktion abgeleitet wird.

3. Verfahren nach Anspruch 1 oder 2, bei dem das binarisierte Bild zunächst in einem kleinen Maßstab mit einem entsprechend kleinen Gesichtsmodell verglichen wird, der Bereich des binarisierten Bildes, in dem ein Gesicht gefunden wurde, vergrößert und mit einem entsprechenden größeren Gesichtsmodell erneut verglichen wird und das Vergrößern und Vergleichen von binarisiertem Bildbereich und Gesichtsmodell ggf. wiederholt wird, bis das Gesicht in dem binarisierten Bild mit ausreichender Genauigkeit lokalisiert wurde.

4. Verfahren nach Anspruch 3, bei dem je nach Größe des binarisierten Bildes unterschiedliche Gesichtsmodelle mit unterschiedlicher Auflösung verwendet werden.

5. Verfahren nach Anspruch 3 oder 4, bei dem je nach Größe des binarisierten Bildes die Kantenextraktion für die Ableitung des binarisierten Bildes aus dem Originalbild mit unterschiedlicher Auflösung erfolgt

6. Verfahren nach einem der Ansprüche 3 bis 5, bei dem das Gesichtsmodell und/oder das binarisierte Bild gedreht werden und je nach Größe des binarisierten Bildes unterschiedliche Rotationsstufen verwendet werden.

**7.** Verfahren nach einem der vorangehenden Ansprüche, bei dem das Hausdorff-Maß auf der Grundlage des Mittelwertes eines bestimmten Prozentsatzes der kleinsten minimalen Hausdorff-Abstände ermittelt wird, wobei der Prozentsatz zwischen 0 % und 100 % liegt.

**8.** System zur Ausführung der Schritte des Verfahrens nach einem der vorangehenden Ansprüche mit einer Rechenvorrichtung zur Berechnung des Hausdorff-Abstandes und des Hausdorff-Maßes auf der Grundlage der Punkte des binarisierten Bildes und des Gesichtsmodells.

## Revendications

**1.** Procédé de reconnaissance de visage dans une image numérisée par comparaison du groupe de points de l'image numérisée au groupe de points d'un modèle de visage, dans lequel les groupes de points de l'image numérisée et du modèle de visage sont comparés à l'aide de la distance de Hausdorff entre les points des groupes de points, **caractérisé en ce que** le modèle de visage est transformé plusieurs fois de manière bi-dimensionnelle pour localiser le modèle de visage dans l'image numérisée, et une position d'un visage est trouvée dans l'image numérisée lorsqu'une mesure dérivée de la distance de Hausdorff est inférieure à une valeur limite.

**2.** Procédé selon la revendication 1, dans lequel l'image numérisée est dérivée de l'image d'origine par extraction de contours.

**3.** Procédé selon la revendication 1 ou 2, dans lequel l'image numérisée est d'abord comparée à petite échelle à un petit modèle de visage correspondant, le domaine de l'image numérisée dans lequel un visage a été trouvé est agrandi et comparé de nouveau à un modèle de visage correspondant plus grand, et l'agrandissement et la comparaison du domaine de l'image numérisée et du modèle de visage sont répétés le cas échéant, jusqu'à ce que le visage soit localisé dans l'image numérisée avec une précision suffisante.

**4.** Procédé selon la revendication 3, dans lequel des modèles de visage différents, de résolution différente, sont utilisés selon la taille de l'image numérisée.

**5.** Procédé selon la revendication 3 ou 4, dans lequel l'extraction de contours pour dériver l'image numérisée à partir de l'image d'origine a lieu avec une résolution différente selon la taille de l'image numérisée.

**6.** Procédé selon une des revendications 3 à 5, dans lequel le modèle de visage et/ou l'image numérisée subissent une rotation, et des degrés de rotation différents sont utilisés selon la taille de l'image numérisée.

**7.** Procédé selon une des revendications précédentes, dans lequel la mesure de Hausdorff est déterminée sur la base de la valeur moyenne d'un pourcentage déterminé des plus petites distances minimales de Hausdorff, le pourcentage se trouvant entre 0 % et 100 %.

**8.** Système pour mettre en oeuvre les étapes du procédé selon une des revendications précédentes, comportant un dispositif de calcul pour le calcul de la distance de Hausdorff et de la mesure de Hausdorff sur la base des points de l'image numérisée et du modèle de visage.

## Claims

**1.** A method of finding a face in a binarized image by comparing the dot group of the binarized image with the dot group of a face model, wherein the dot groups of the binarized image and of the face model are compared on the basis of the Hausdorff spacing between the dots of the dot groups **characterized in that** the face model being subjected to multiple two-dimensional transforms in order to locate the face model in the binarized image, and a position of a face in the binarized image is found when a measure derived from the Hausdorff spacing fails to reach a limit value.

**2.** The method as claimed in claim 1, wherein the binarized image is derived from the original image by means of edge extraction.

**3.** The method as claimed in claim 1 or 2, wherein the binarized image first is compared on a small scale with a face model of corresponding small size, the area of the binarized image in which a face was found is enlarged and compared once again with a face model of corresponding larger size, the enlarging and comparing of the binarized image area and face model are repeated, as the case may be, until the face in the binazired image was localized with sufficient accuracy.

**4.** The method as claimed in claim 3, wherein different face models with different resolutions are used depending on the size of the binarized image.

**5.** The method as claimed in claim 3 or 4, wherein the edge extraction for deriving the binarized image from the original image is carried out with different resolutions depending on the size of the binarized image.

6. The method as claimed in any one of claims 3 to 5, wherein the face model and/or the binarized image are rotated and different steps of rotation are used depending on the size of the binarized image.

7. The method as claimed in any one of the preceding claims, wherein the Hausdorff measure is determined on the basis of the average value of a certain percentage of the smallest minimum Hausdorff spacings, the percentage being between 0 % and 100 %.

8. A system for implementing the method as claimed in any one of the preceding claims, comprising a computing device for calculating the Hausdorff spacing and the Hausdorff measure on the basis of the dots of the binarized image and the face model.

Fig. 1

Fig. 2

Fig. 3

Fig. 4